# EUROPEAN PATENT APPLICATION

(11) **EP 4 672 001 A1**
(43) Date of publication of application: **31.12.2025**
(21) Application number: 25185263.8
(22) Date of filing: 25.06.2025
(51) Int. Cl.: G06F 12/02, G06F 15/78

(54) **SYSTEMS AND METHODS FOR EXTENDED MEMORY**

(30) Priority: 28.06.2024 US 202463666105 P; 08.10.2024 US 202463704975 P; 20.02.2025 US 202563760905 P; 30.05.2025 US 202519224106
(71) Applicant: Samsung Electronics Co., Ltd., Suwon-si, Gyeonggi-do 16677 (KR)
(72) Inventor: NGUYEN, Marie Mai, San Jose, CA, 95134 (US); PITCHUMANI, Rekha, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Systems and methods for extended memory are disclosed. An apparatus (100) for extended memory may include a first processing device (102); a second processing device (200); a first memory device (106, 108); and a second memory device (104). A first logical memory space and a second logical memory space are allocated to respectively the first processing device (102) and the second processing device (200). The first logical memory space and the second logical memory space are further mapped to a first physical memory space of one of the first memory device (106, 108) and the second memory device (104).

## Description

### FIELD

One or more aspects of embodiments according to the present disclosure relate to memory devices, and more particularly, to extending memory capacity and bandwidth for memory devices with compute capability.

### BACKGROUND

The use of artificial intelligence (AI) has increased dramatically over the last few years. AI has become commonly used in domains such as image classification, speech recognition, media analytics, heath care, autonomous machines, smart assistants, and the like. Using AI often necessitates the use of large datasets and advanced algorithms and that similarly necessitate efficient and cost-effective data processing solutions.

The above information disclosed in this Background section is only for enhancement of understanding of the background of the present disclosure, and therefore, it may contain information that does not form prior art.

### SUMMARY

One or more embodiments of the present disclosure are directed to an apparatus comprising: a first processing device; a second processing device; a first memory device; and a second memory device; wherein, a first logical memory space and a second logical memory space are configured to be allocated for respectively the first processing device and the second processing device, wherein the first logical memory space and the second logical memory space are further configured to be mapped to a first physical memory space of one of the first memory device or the second memory device.

According to some embodiments, the first processing device includes a graphical processing device, and the second processing device includes a processing engine embedded in the first memory device.

According to some embodiments, the first memory device includes two or more memory chips configured to be vertically stacked on top of each other.

According to some embodiments, the first memory device includes a type of random access memory.

According to some embodiments, the first processing device and the second processing device are configured to share data stored in the first physical memory space.

According to some embodiments, the first processing device is configured to provide an address of the first physical memory space, and the second processing device is configured to map the second logical memory space to the first physical memory space based on the address.

According to some embodiments, the first processing device is configured to execute a first computation and the second processing device is configured to execute a second computation, wherein execution of the second computation is based on the execution of the first computation.

According to some embodiments, the first computation is associated with a first stream, and the second computation is associated with a second stream.

According to some embodiments, the first logical memory space and the second logical memory space are assigned based on a memory allocation request, wherein the memory allocation request identifies the one of the first memory device or the second memory device, and further identifies a type of processing device for accessing the one of the first memory device or the second memory device.

One or more embodiments of the present disclosure are directed to a method that includes: receiving a memory allocation request; based on receiving the memory allocation request: allocating a first logical memory space for a first processing device; allocating a first physical memory space in a memory device based on the first logical memory space; allocating a second logical memory space for a second processing device; and mapping the first physical memory space to the first logical memory space and the second logical memory space.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of a computing system according to one or more embodiments of the present disclosure;
FIG. 2 depicts a block diagram of a base die according to one or more embodiments;
FIG. 3 depicts a conceptual layout diagram of logical and physical memory spaces that may be allocated for use by processing devices according to one or more embodiments of the present disclosure;
FIG. 4 depicts components of a host computing device that are invoked for a shared memory allocation according to one or more embodiments of the present disclosure;
FIG. 5 depicts an example programming code for sharing data stored in a memory device according to one or more embodiments of the present disclosure;
FIG. 6 depicts a flow diagram of a process for extending memory capacity and bandwidth according to one or more embodiments of the present disclosure; and
FIG. 7 depicts a flow diagram of a process for executing operations when data is shared according to one or more embodiments of the present disclosure.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

Applications such as AI and machine learning applications may use computing devices such as graphics processing units (GPUs) to accelerate the computing of data. Processing engines integrated into memory, such as processing-in-memory (PIM) devices, may also be used to increase processing speeds of computations. When the PIM architecture is incorporated with high bandwidth memory (HBM) dies, an HBM-PIM stack or cube may result that provides increased memory speed and capacity in addition to processing speed.

In some cases, one or more GPUs may be provided in a same package as one or more HBM-PIMs. A computing device that includes both GPUs and HBM-PIMs may be referred to as an A-HBM companion. Both the GPUs and the processing engines of the HBM-PIMs may access the HBM stack for writing/storing and reading/loading data. The HBM stack may include several memory dies (may also be referred to as core dies) stacked vertically over a logic die (may also be referred to as a base die or buffer). The memory die may be relatively fast memory such as, for example, a dynamic random access memory (DRAM). Although DRAM may be fast compared to other memory solutions, it may also be costly in terms of power and money, and have lower capacity. It may be desirable to increase the memory capacity and bandwidth of an A-HBM companion device while minimizing cost.

In general terms, embodiments of the present disclosure are directed to a single physical computing device with two or more independent (e.g., separate) compute units and two or more independent (e.g., separate) memory devices that allow mixing and matching of the compute units with the memory devices. In some embodiments, the two or more independent compute units include a GPU and a PIM, although embodiments are not limited thereto. In some embodiments, the two or more memory devices include an HBM stack and a low-power double data rate (LPDDR) memory, although embodiments are not limited thereto.

In some embodiments, the mixing and matching of the compute units with the memory devices allow for four usage modes in a single physical computing device. For example, the usage modes may include: 1) GPU + HBM; 2) GPU + LPDDR; 3) PIM + HBM; and 4) PIM + LPDDR. A first one of the usage modes may be activated concurrently with a second one of the usage modes (or a subset of other usage modes).

In some embodiments, the operating system of a host computing device may identify the compute units as separate and independent compute units, and further identify four independent memory regions in a same logical address space that may be allocated to respectively the four usage modes. Two of the logical memory regions allocated respectively to the GPU+HBM and PIM+HBM usage modes may be mapped to the physical address space in the HBM. Two of the logical memory regions allocated respectively to the GPU+LPDDR and PIM+LPDDR may be mapped to the physical address space of the LPDDR.

In some embodiments, a user determines the usage mode to invoke for a particular application, or portions of the application, and allocates memory in the appropriate logical address space based on the determined usage mode. For example, for computations where speed may not be a primary concern, the LPDDR may be selected as the memory medium to be used by the GPU and/or PIM. In another example, for computations where speed may be a primary concern, the HBM stack may be selected as the memory medium to be used by the GPU and/or PIM. In a more specific example, the GPU + LPDDR may be used for prefill operations of an LLM, and the PIM + HBM may be used for decode operations of the LLM, all within a single physical device containing the GPU, PIM, HBM, and LPDDR.

In some embodiments, programming methods are provided for allocating memory in the HBM or LPDDR for use by GPU, PIM, or both. In some embodiments, the GPU and PIM share data stored in a particular memory device. In this regard, programming methods may be provided to provide data coherency and operation synchronization between the GPU and the PIM.

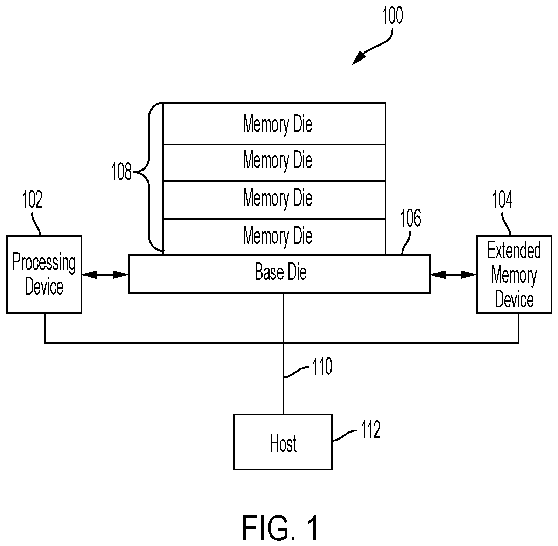

FIG. 1 depicts a block diagram of a computing system according to an embodiment of the present disclosure. The computing system includes a computational memory device 100 coupled to a processing device 102 and an extended memory device 104. In some embodiments, one or more of the computational memory devices 100, processing devices 102, and extended memory devices 104, may be packaged together in a single physical device, such as, for example, in an A-HBM companion device.

The computational memory device 100 may be, for example, a 3D-stacked memory device (e.g., an HBM) with one or more embedded processing devices (e.g., PIMs). In this regard, the 3D-stacked memory device may include a base die (also referred to as a buffer or logic die) 106, and two or more memory dies (also referred to as core dies or memory stack) 108 stacked over the base die 106. One or more of the processing devices (e.g., PIMs) may be embedded in the one or more memory dies (also referred to as memory stack) 108 and/or in the base die 106.

The memory dies 108 may be implemented as DRAMs. However, the present invention is not limited thereto, and the memory dies 108 may be implemented as any suitable memory that may be implemented in a 3D-stacked structure.

In some embodiments, the processing device 102 includes a GPU, although embodiments are not limited thereto. For example, the processing device 102 may, in addition or in lieu of the GPU, include neural processing unit (NPU), a tensor processing unit (TPU), co-processor unit, and/or the like. The processing device 102 may be configured to perform computations or operations (used interchangeably herein) of an application running in a host computing device ("host") 112. The operations may include, for example, prefill and/or decode operations of a large language model (LLM), although embodiments are not limited thereto, and may include other computations of the application.

In some embodiments, the extended memory device 104 includes an LPDDR, although embodiments are not limited thereto. For example, the extended memory device 104 may, in lieu or in addition to an LPDDR, include a static DRAM (SDRAM), random access memory (RAM), flash memory, and/or the like. The use of an extended memory device 104 such as an LPDDR may allow the capacity and bandwidth of the computational memory device 100 to be increased in a cost efficient manner.

In some embodiments, the host 112 is coupled to the computational memory device 100, processing device 102, and extended memory device 104 over one or more data communication links 110. In some embodiments, communication of the processing device 102 and the extended memory device 104 is through the base die 106. The host 112 may include an external processor such as, for example, a central processing unit (CPU). In some embodiments, the CPU is configured to run one or more applications including AI and/or machine learning applications. The machine learning application may include, for example, an LLM. Computations may be performed while running the application. The computations may be offloaded to the computational memory device 100 and/or processing device 102 for a faster and more efficient computation.

In some embodiments, the computational memory device 100 and/or processing device 102 receive control instructions from the host 112 through the data communication links 110. The control instructions may be for allocating memory in the computational memory device 100 and/or the extended memory device 104. The control instructions may also be for instructing the computational memory device 100 and/or processing device 102 to perform operations for an application running in the host 112.

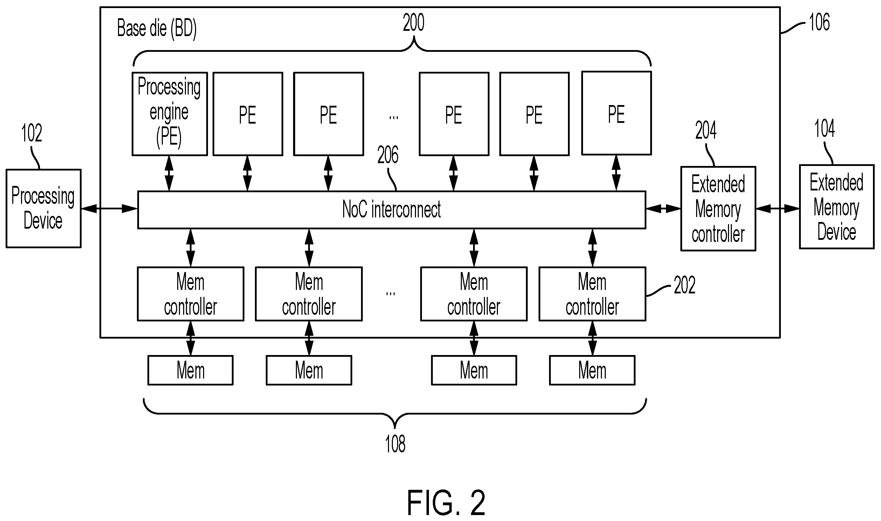

FIG. 2 depicts a block diagram of the base die 106 according to one or more embodiments of the present disclosure. The base die 106 includes one or more processing elements (PE) or devices (also referred to as PIMs) 200, one or more memory controllers 202, and an extended memory controller 204, communicating with each other over a data communications network 206. The data communications network 206 may also enable communication between the processing device 102 and the base die 106 or the extended memory device 104. The communication may be, for example, to allow the processing device 102 to write or read data to or from the memory stack 108 and/or extended memory device 104. The data communications network 206 may be implemented, for example, as a network-on-chip (NoC) interconnect.

One or more of the processing elements 200 may include a computing circuit including, for example, arithmetic logic units (ALUs). The computing circuit may be configured to perform computations requested by the application. For example, the ALUs may retrieve data from the memory stack 108 or the extended memory device 104 to perform a computation using the data, and may transmit the results of the computation back to the memory stack 108 or extended memory device 104 for storing therein.

In some embodiments, the processing device 102 and one or more of the PEs 200 may be independently invoked to access the memory stack 108 and/or extended memory device 104 to perform computations of an application. In this regard, the processing device 102 and PE 200 (collectively referenced as processing devices 102, 200) may be mixed and matched with the extended memory device 104 and memory stack 108 (collectively referenced as memory devices 104, 108) to effectively provide four computing devices in a single physical device. The four computing devices (also referred to as usage modes) may include: 1) processing device 102 + memory stack 108; 2) processing device 102 + extended memory device 104; 3) PE 200 + memory stack 108; and 4) PE 200 + extended memory device 104. The computing devices may be independently invoked for performing a computation based on instructions from the host 112.

In some embodiments, the application provides instructions that identify the processing device(s) that are to use a memory device. Physical memory may be allocated in the identified memory device and mapped to the logical address in a logical address space. One or more embodiments of the present invention allow for data stored in the allocated physical memory to be shared by the processing devices 102, 200.

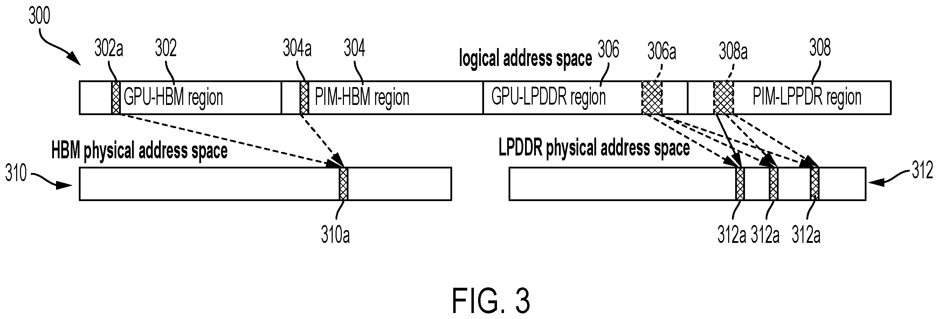

FIG. 3 depicts a conceptual layout diagram of logical and physical memory spaces that may be allocated for use by the processing devices 102, 200 according to one or more embodiments of the present disclosure. In some embodiments, an operating system (OS) of the host 112 allocates memory in a logical address space 300 in response to a memory allocation request from the application. The logical address space 300 may be divided into four independent memory regions 302, 304, 306, and 308 (referred to as 302-308). One or more of the memory regions 302-308 may be allocated based on the usage mode identified in the request.

The four memory regions 302-308 of the logical address space 300 may include: 1) a first memory region 302 for use by the processing device 102 and memory stack 108; 2) a second memory region 304 for use by the PEs 200 and memory stack 108; 3) a third memory region 306 for use by the processing device 102 and extended memory device 104; and 4) a fourth memory region for use by the PEs 200 and extended memory device 104.

In some embodiments, memory is allocated in the physical address space based on the allocations in the logical address space. For example, a physical address space 310 in the memory stack 108 may be allocated for one or more allocations in the corresponding logical address space 302, 304. A physical address space 312 in the extended memory device 104 may be allocated for one or more allocations in the corresponding logical address space 306, 308.

In some embodiments, the processing devices 102, 200 may share data in one or more of the memory devices 104, 108. For example, both the processing device 102 and the PEs 200 may share data stored in the memory stack 108. In this case, logical memory addresses 302a, 304a are allocated in the appropriate logical address spaces 302, 304. A single physical memory allocation 310a may occur in the corresponding physical address space 310. The logical memory address 302a, 304a may be mapped to the same physical address 310a (e.g., the same physical page).

In another example, both the processing device 102 and the PEs 200 may share data stored in the extended memory device 104. In this case, logical memory addresses 306a, 308a are allocated in the appropriate logical address spaces 306, 308. A single physical memory allocation 312a may occur in the corresponding physical address space 312. The logical memory address 306a, 308a may be mapped to the same physical address 312a (e.g., the same physical page). In some embodiments, the logical memory addresses 302a, 304a, 306a, 308a are each contiguous memory addresses that are mapped to non-contiguous physical address pages 310a, 312a.

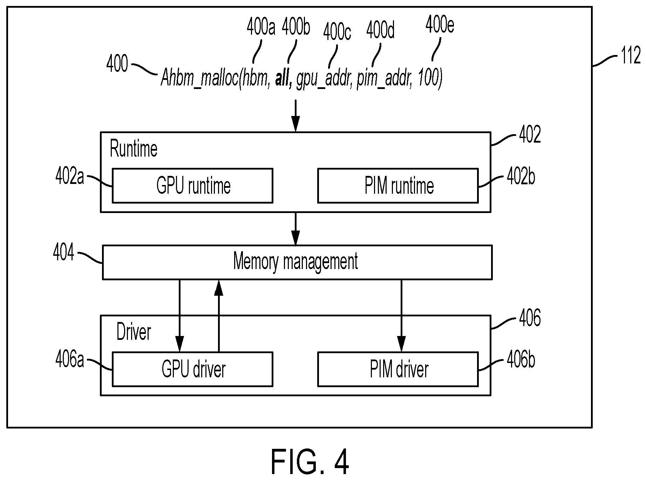

FIG. 4 depicts components of the host 112 that are invoked for a shared memory allocation according to one or more embodiments of the present disclosure. In some embodiments, an application includes a memory allocation function 400 that is executed by the OS of the host 112 for allocating memory in the appropriate memory device 104, 108. The memory allocation function 400 may include parameters that identify a memory type (extended memory 104 or memory stack 108), device type (processing device 102, PE 200, or all), pointer to the allocated memory in the logical address space based on the device type, and size of the memory to allocate.

In the example of FIG. 4, the memory allocation function 400 is a shared memory allocation request. In this regard, the memory allocation function 400 identifies the memory type 400a as the extended memory 104 (e.g., HBM), and the device type 400b as both processing devices 102, 200 (e.g., all). The function returns a first address pointer 400c to the logical memory in the logical address space 302 allocated to the processing device 102 (e.g., GPU), and a second address pointer 400d to the logical memory in the logical address space 304 allocated to the PEs 200 (e.g., PIM). A requested size 400e of the allocation in the example of FIG. 4 is 100 bytes.

In some embodiments, a memory allocation request is transmitted based on execution of the memory allocation function 400. The request may be received by a runtime memory management layer 402 of a memory management engine 404 executed by the OS of the host 112. In some embodiments, a first (e.g., GPU) runtime layer 402a may process memory allocation requests for use by the processing device 102 (e.g., GPU), and a second (e.g., PIM) runtime layer 402b may process memory allocation requests for use by the PE/PIM 200.

In some embodiments, the memory management engine 404 receives the memory allocation request from the runtime layer 402 and forwards the request to an appropriate driver 406. In some embodiments, a request for allocating memory for the processing device 102 (e.g., the GPU) is provided to a first (e.g., GPU) driver 406a, and a request for allocating memory for the PE 200 is provided to a second (e.g., PIM) driver 406b.

The first driver 406a may be configured to maintain track of available logical and physical memory chunks or pages of the memory devices 104, 108 and allocate a logical address in the first memory region 302 or the third memory region 306, and one or more physical addresses in the physical address space 310 or 312 based on the parameters of the request.

The first driver 406a may return the allocated logical memory address and the one or more allocated physical memory addresses to the memory management engine 404. The memory management engine 404 may send the memory allocation request for the PE 200 to the second driver 406b along with the list of physical addresses returned by the first driver 406a.

The second driver 406b may be configured to maintain track of available logical and physical memory of the memory devices 104, 108 and allocate a logical address in the second memory region 304 or the fourth memory region 308 of the logical address space 300. For a shared memory allocation request, the second driver 406b may refrain from allocating a physical address in the physical address space 310 or 312 of the requested memory device (e.g., the extended memory device 104 or the memory stack 108). The second driver 406b may map the allocated logical address to the list of physical addresses returned by the first driver 406a. In this manner, the processing device 102 and the PE 200 may share the physical memory allocation and write and read to and from the same physical address(es). The logical addresses, however, may remain separate and independent, allowing the processing device 102 and PE to execute concurrently with each other.

One or more different types of memory allocation functions may be generated throughout an application for different combinations of the processing devices 102, 200 and memory devices 104, 108 depending on the operations to be performed. For example, memory may be allocated for one or more of the four usage modes: 1) processing device 102 (e.g., GPU) + memory stack 108 (e.g., HBM); 2) processing device 102 + extended memory device 104 (e.g., LPDDR); 3) PE 200 + memory stack 108; and 4) PE 200 + extended memory device 104. For example, shared (or non-shared) memory may be allocated in the memory stack 108 for certain computations where speed may be a factor. For other operations where speed may not be a factor, shared (or non-shared) memory may be allocated in the extended memory device 104.

In some embodiments, when the shared data can be modified (e.g., written) by either processing device 102, 200, a data coherency measure may be implemented to ensure data coherency. The data coherency measure may allow the processing devices 102, 200 to have the same, up-to-date view of the shared data when the data is stored in their respective caches (e.g., hardware caches).

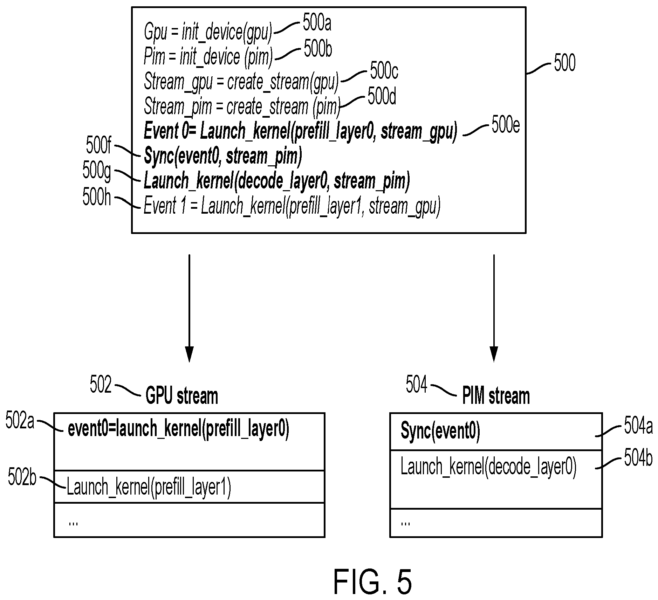

FIG. 5 depicts an example programming code 500 for sharing data stored in the memory device 104 or 108 according to one or more embodiments of the present disclosure. In some embodiments, the programming code 500 generates a first data structure (also referred to as a stream) 502 for execution by the processing device 102 (e.g., GPU), and a second data structure or stream 504 for execution by the PEs 200 (e.g., PIM).

In the example of FIG. 5, the programming code 500 initializes a GPU processing device and a PIM processing device via initialization instructions 500a, 500b. The first stream 502 (e.g., GPU stream) and the second stream 504 (e.g., PIM stream) are generated via stream creation instructions 500c, 500d.

The streams 502, 504 may queue one or more operations to be executed in order by the corresponding processing device. For example, the programming code 500 may define an operation with one or more parameters as an event 500e (e.g., event 0). The operation may include kernel launch operation, memory copy operation, or the like. The parameters of a kernel launch operation may include, for example, identification of a prefill layer and identification of the stream where the operation is to be queued. In the example of FIG. 5, a GPU kernel prefill layer 0 operation defined as event 0 may be queued as a first queued operation 502a of the GPU stream.

In some embodiments, the operations queued in the streams 502, 504 are executed in order. For example, the first queued operation 502a in the GPU stream is executed before a second queued operation 502b in the same stream. The second queued operation 502b may be defined by the programming code 500 as another event 500h (e.g., event 1). The operations queued in one stream may be synchronized with operations in another stream via a synchronization operation.

In some embodiments, the programming code 500 includes synchronization instructions 500f for executing a synchronization operation. The synchronization instructions 500f may identify the event (e.g., event 0) with which a current stream is to be synchronized, and identification of the current stream where the synchronization operation is to be queued (e.g., PIM stream).

In the example of FIG. 5, a synchronization operation 504a is queued in the PIM stream based on the synchronization instructions 500f. The synchronization operation 504a in the example of FIG. 5 identifies event 0 as the event that is to finish executing before other operations of the stream may be executed. For example, the PIM stream waits for event 0 of the GPU stream to finish executing before the PIM stream may move to execute a next operation 504b of the stream as defined by instructions 500g of the programming code 500.

In some embodiments, when a processing device 102, 200 finishes executing an operation, data in the corresponding hardware cache is flushed, and the data is stored in the memory device (e.g., memory device 104 or 108). For example, when a GPU kernel prefill layer 0 operation identified as event 0 finishes executing, the data is flushed from the hardware cache and stored in the memory device. A notification may be received by the synchronization operation 504a that event 0 has finished executing, allowing the synchronization operation 504a to finish execution, and allow the next queued operation 504b (e.g., PIM kernel decode layer 0 operation) to be executed. In executing the PIM kernel decoder layer 0 operation, results of the GPU kernel prefill layer 0 operation may need to be accessed. The synchronization event may help ensure that the data that is accessed by the next queued operation 504b is the up-to-date data returned by the GPU kernel prefill layer 0 operation.

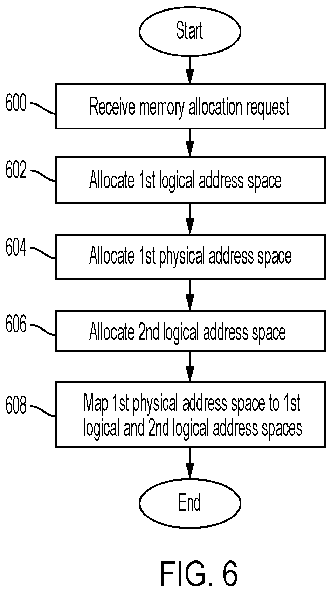

FIG. 6 depicts a flow diagram of a process for extending memory capacity and bandwidth according to one or more embodiments of the present disclosure. The process starts, and in step 600, the memory management engine 404 receives a memory allocation request from an application. The memory allocation request may identify a memory type (extended memory 104 or memory stack 108) where memory is to be allocated, device type (processing device 102, PE 200, or both) to use the allocated memory, pointer to the allocated memory in the logical address space based on the device type, and size of the memory to allocate. For purposes of illustration, it is assumed that the memory allocation request in step 600 is for shared memory for use by the processing device 102 and the PE 200.

In step 602, the first driver 406a allocates a first logical memory space in the first memory region 302 or the third memory region 306 depending on the memory device identified in the memory allocation request.

In step 604, the first driver 406a allocates a first physical memory space in the memory device 104 or 108 for the allocated logical memory. The allocated logical and physical memory addresses may be returned to the memory management engine 404.

In step 606, the second driver 406b allocates a second logical memory space in the second memory region 304 or the fourth memory region 308 depending on the memory device identified in the memory allocation request. In the example where data in the physical memory region is to be shared by the processing devices 102, 200, the second driver 406b may refrain from allocating a physical memory region for the allocated second logical memory addresses. In some embodiments, the first physical memory space allocated by the first driver 406a in step 604 is used for the allocated second logical memory addresses.

In step 608, the allocated first physical memory space is mapped to the allocated first logical memory addresses and the second logical memory addresses. A pointer to the allocated logical memory addresses may be returned to the requesting application (e.g., via the appropriate address pointers 400c, 400d). The application may use the returned addresses for writing and reading data to and from the addresses when operations are performed by the processing devices 102, 200.

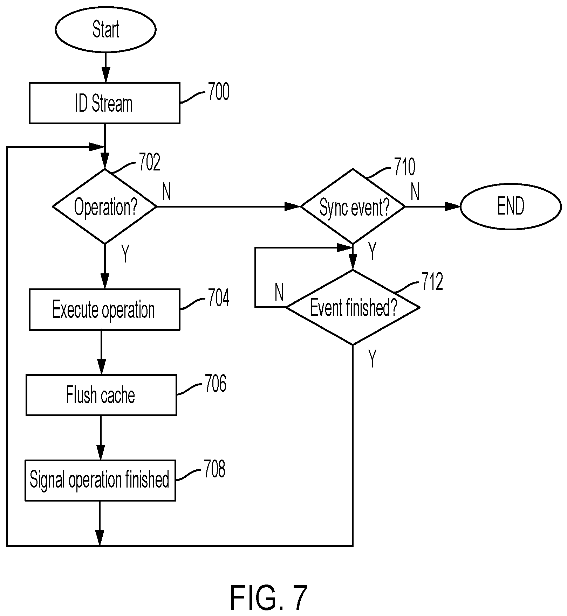

FIG. 7 depicts a flow diagram of a process for executing operations of the streams 502, 504 of FIG. 5, where data is shared by the processing device 102 and PE 200 according to one or more embodiments of the present disclosure. In some embodiments, the streams are executed concurrently with each other.

The process starts, and in step 700, the processing device 102 and PE 200 identify the stream generated for the respective devices.

In step 702, the processing device 102 and PE 200 respectively determine whether there is an operation event queued in the corresponding stream 502, 504.

If the answer is YES, the corresponding processing device 102 and/or PE 200 executes the operation in act 804.

In step 706, the corresponding processing device 102 and/or PE 200 flushes its respective hardware cache, and stores the flushed data in the shared physical memory location.

In step 708, the corresponding processing device 102 and/or PE 200 signals that execution of the operation has finished.

Referring again to step 702, if the event to be executed is not an operation, the processing device 102 and/or PE 200 determines, in step 710, whether the event is a synchronization event.

If the answer is YES, the event in the other stream identified by the synchronization event is monitored for determining whether the event has finished execution. For example, the synchronization event may wait for a completion signal by the monitored event.

In step 712, a determination is made as to whether the monitored event has finished executing. In some embodiments, the synchronization event continues monitoring for completion of the execution of the event until a determination is made that the event has finished executing. If the event has finished executing, the synchronization event may stop, and a next event of the stream may be executed.

As a person of skill in the art should appreciate, embodiments of the present disclosure allow for increased transactions to be processed via, for example, the concurrent usage modes, when compared to a solution that uses a single processing device (e.g., a GPU server). The usage modes may be invoked to handle different operations (e.g., prefill operations and decode operations) concurrently using a shared physical memory space. Although two GPU servers may achieve similar increased transactions, the use of two GPU servers may be more expensive in terms of power and money than embodiments of the present disclosure. Embodiments of the present disclosure also provide flexibility in the mix and matching of processing devices and memory devices based on the operations to be performed.

One or more embodiments of the present disclosure may be implemented in one or more processors or processing devices. The term processor or processing device may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for extended memory capacity and bandwidth have been specifically described and illustrated herein, many modifications and variations will be apparent to those skilled in the art. Accordingly, it is to be understood that systems and methods for extended memory capacity and bandwidth constructed according to principles of this disclosure may be embodied other than as specifically described herein.

The systems and methods for extending memory capacity and bandwidth may contain one or more combination of features set forth in the below statements.

An apparatus may comprise a first processing device; a second processing device; a first memory device; and a second memory device. A first logical memory space and a second logical memory space may be configured to be allocated for respectively the first processing device and the second processing device. The first logical memory space and the second logical memory space may further be configured to be mapped to a first physical memory space of one of the first memory device or the second memory device.

The first processing device may include a graphical processing device, and the second processing device may include a processing engine embedded in the first memory device.

The first memory device may include two or more memory chips configured to be vertically stacked on top of each other.

The first memory device may include a type of random access memory.

The first processing device and the second processing device may be configured to share data stored in the first physical memory space.

The first processing device may be configured to provide an address of the first physical memory space. The second processing device may be configured to map the second logical memory space to the first physical memory space based on the address.

The first processing device may be configured to execute a first computation. The second processing device may be configured to execute a second computation. Execution of the second computation may be based on the execution of the first computation.

The first computation may be associated with a first stream. The second computation may be associated with a second stream.

The first logical memory space and the second logical memory space may be assigned based on a memory allocation request. The memory allocation request may identify the one of the first memory device or the second memory device, and may further identify a type of processing device for accessing the one of the first memory device or the second memory device.

A method may comprise at least one or all of the following steps: receiving a memory allocation request; based on receiving the memory allocation request: allocating a first logical memory space for a first processing device; allocating a first physical memory space in a memory device based on the first logical memory space; allocating a second logical memory space for a second processing device; and mapping the first physical memory space to the first logical memory space and the second logical memory space.

The first processing device may include a graphical processing device. The second processing device may include a processing engine embedded in the first memory device.

The first memory device may include two or more memory chips configured to be vertically stacked on top of each other.

The first memory device may include a type of random access memory.

The first processing device and the second processing device may be configured to share data stored in the first physical memory space.

The first processing device may be configured to provide an address of the first physical memory space. The second processing device may be configured to map the second logical memory space to the first physical memory space based on the address.

The first processing device may be configured to execute a first computation. The second processing device may be configured to execute a second computation. Execution of the second computation may be based on the execution of the first computation.

The first computation may be associated with a first stream. The second computation may be associated with a second stream.

The first logical memory space and the second logical memory space may be assigned based on a memory allocation request. The memory allocation request may identify the one of the first memory device or the second memory device, and may further identify a type of processing device for accessing the one of the first memory device or the second memory device.

## Claims

1. An apparatus (100) comprising:
a first processing device (102);
a second processing device (200);
a first memory device (106, 108); and
a second memory device (104);
wherein, a first logical memory space (302, 306) and a second logical memory space (304, 308) are configured to be allocated for respectively the first processing device (102) and the second processing device (200), wherein the first logical memory space (302, 306) and the second logical memory space (304, 308) are further configured to be mapped to a physical memory space (310, 312) of one of the first memory device (106, 108) or the second memory device (104).

2. The apparatus (100) of claim 1, wherein the first processing device (102) includes a graphical processing device, and the second processing device (200) includes a processing engine embedded in the first memory device (106, 108).

3. The apparatus (100) of claim 1 or 2, wherein the first memory device (106, 108) includes two or more memory chips configured to be vertically stacked on top of each other.

4. The apparatus (100) of any one of claims 1 to 3, wherein the first memory device (106, 108) includes a type (400a) of random access memory.

5. The apparatus (100) of any one of claims 1 to 4, wherein the first processing device (102) and the second processing device (200) are configured to share data stored in the physical memory space (310, 312).

6. The apparatus (100) of any one of claims 1 to 5, wherein the first processing device (102) is configured to provide an address (302a, 304a, 306a, 308a, 310a, 312a) of the physical memory space (310, 312), and the second processing device (200) is configured to map the second logical memory space (304, 308) to the physical memory space (310, 312) based on the address (302a, 304a, 306a, 308a, 310a, 312a).

7. The apparatus (100) of any one of claims 1 to 6, wherein the first processing device (102) is configured to execute a first computation and the second processing device (200) is configured to execute a second computation, wherein execution of the second computation is based on the execution of the first computation.

8. The apparatus (100) of claim 7, wherein the first computation is associated with a first stream (502), and the second computation is associated with a second stream (504).

9. The apparatus (100) of any one of claims 1 to 8, wherein the first logical memory space (302, 306) and the second logical memory space (304, 308) are assigned based on a memory allocation request, wherein the memory allocation request identifies the one of the first memory device (106, 108) or the second memory device (104), and further identifies a type (400b) of processing device for accessing the one of the first memory device (106, 108) or the second memory device (104).

10. A method comprising:
receiving a memory allocation request;
based on receiving the memory allocation request:
allocating (602) a first logical memory space (302, 306) for a first processing device (102);
allocating (606) a physical memory space (310, 312) in a memory device (104, 108) based on the first logical memory space (302, 306);
allocating (608) a second logical memory space (304, 308) for a second processing device (200); and
mapping (608) the physical memory space (310, 312) to the first logical memory space (302, 306) and the second logical memory space (304, 308).

11. The method of claim 10, wherein the first processing device (102) includes a graphical processing device, and the second processing device (200) includes a processing engine embedded in the first memory device, wherein optionally the first memory device includes two or more memory chips configured to be vertically stacked on top of each other, wherein optionally the first memory device includes a type (400a) of random access memory, and wherein optionally the first processing device (102) and the second processing device (200) are configured to share data stored in the physical memory space (310, 312).

12. The method of claim 10 or 11, wherein the first processing device (102) is configured to provide an address (302a, 304a, 306a, 308a, 310a, 312a) of the physical memory space (310, 312), and the second processing device (200) is configured to map the second logical memory space (304, 308) to the physical memory space (310, 312) based on the address (302a, 304a, 306a, 308a, 310a, 312a).

13. The method of any one of claim 10 to 12, wherein the first processing device (102) is configured to execute a first computation and the second processing device (200) is configured to execute a second computation, wherein execution of the second computation is based on the execution of the first computation.

14. The method of any one of claims 10 to 13, wherein the first computation is associated with a first stream (502), and the second computation is associated with a second stream (504).

15. The method of any one of claim 10 to 14, wherein the first logical memory space (302, 306) and the second logical memory space (304, 308) are assigned based on a memory allocation request, wherein the memory allocation request identifies the one of the first memory device (106, 108) or the second memory device (104), and further identifies a type (400b) of processing device for accessing the one of the first memory device (106, 108) or the second memory device (104).
